# EUROPEAN PATENT SPECIFICATION

(11) **EP 3 622 203 B1**
(45) Date of publication and mention of the grant of the patent: **31.08.2022**
(21) Application number: 18725785.2
(22) Date of filing: 08.05.2018
(51) Int. Cl.: F16H 61/16, F16H 59/70, F16H 59/02, F16H 63/46

(54) **APPARATUS AND METHOD TO CONTROL TRANSMISSION OF DUAL CLUTCH TRANSMISSION**
VORRICHTUNG UND VERFAHREN ZUR STEUERUNG DER ÜBERTRAGUNG EINES DOPPELKUPPLUNGSGETRIEBES
APPAREIL ET PROCÉDÉ DE COMMANDE DE TRANSMISSION D'UNE TRANSMISSION À DOUBLE EMBRAYAGE

(30) Priority: 08.05.2017 KR 20170057565
(43) Date of publication of application: 18.03.2020
(73) Proprietor: Vitesco Technologies GmbH, 93055 Regensburg (DE)
(72) Inventor: KIM, SeungWan, Seoul 831-302 (KR); RHEE, SeWoong, Icheon 201-802 (KR); LEE, Eunjin, Seoul 05530 (KR)
(74) Representative: Vitesco Technologies
(86) International application number: PCT/EP2018/061856
(87) International publication number: WO 2018/206569

(56) References cited:
- EP-A1- 2 765 336
- DE-A1-102015 200 201
- FR-A1- 3 043 045
- GB-A- 2 430 243

## Description

### FIELD OF INVENTION

The present invention relates to an apparatus and method for controlling transmission of a DCT, which provide a safety mechanism based on gear position monitoring.

### BACKGROUND OF INVENTION

In general, a transmission is referred to as a transmission and also a transmission device that transmits power generated by various engines to required rotational force according to a speed.

Such a transmission constitutes various transmission steps according to the nature of a vehicle. Also, there is a manual method in which a manual operation is performed or an automatic method in which shifting is automatically performed through a transmission to match a speed according to whether a person operates a clutch.

Both the manual and automatic transmissions have advantages and disadvantages, and recently, in the case of automatic transmission vehicles using dual clutch transmission (hereinafter, referred to as a DCT), automatic and manual dual clutch transmission are often used.

The DCT is provided with two clutches, and the two clutches are respectively connected to an odd-numbered gear and an even-numbered gear to transmit or interrupt torque of the engine.

For example, in the case of five-speed shifting, a first clutch is configured to be engaged with first, third, and fifth gears, and a second clutch is configured to be engaged with second, fourth, and R gears. When the first clutch is engaged to travel at a speed of a specific shift gear (for example, the first gear), the second clutch stands by in the state of being engaged with the next gear (the second gear) before an up-shift or a down-shift occurs, and then, when the shift occurs, the second gear is configured to be engaged to travel at a speed of the next shift gear (the second gear) .

In the conventional DCT, a transmission system is provided as a normally-open type clutch, and when a transmission control unit (TCU) sets a power stage state to OFF, the clutch is opened. In this system, when a dangerous situation is detected by a safety mechanism of the TCU, which is called LEVEL 2 monitoring, the power stage state is set to OFF to open the clutch, and the engine power may not be transmitted to a wheel. Thus, a safe state may be achieved.

On the other hand, in the case in which the transmission system is constituted by a normally-closed type clutch, when the TCU sets the power stage state to OFF, the clutch is closed. Here, in the case in which the safety mechanism of the TCU, which is called LEVEL 2 monitoring, is applied in the same manner, when a dangerous situation is detected to set the power stage state to OFF, the clutch is not opened, and the engine power is transmitted to the wheel so that the safe state is not maintained.

Thus, there is a problem of changing the transmission system to provide an additional system that opens the clutch of the transmission.

FR 3 043 045 A1 discloses a method of controlling a manual gearbox interacting with a clutch. The method comprises steps of determining, while the input shaft of the gearbox is rotated, the speed that would take this gearbox input shaft if a given ratio of the gearbox was engaged, comparing the speed that this gearbox input shaft would have for this given gear with a threshold speed, and depending on the result of this comparison, acting on the clutch and/or the gearbox so as to oppose the engagement of this report by the user.

DE 10 2015 200201 A1 discloses a method for making it difficult to engage inappropriate gears in a vehicle with an automated or semi-automatic clutch in which the gear is engaged by means of a selector lever. The selector lever for changing hears in a gear shift associated with the gear is positioned. A movement of the selector lever is monitored at a gear change and the clutch is closed when a direction of movement is found in a shift gate with an unsuitable gear.

As the background art of the present invention, "apparatus and method for controlling transmission of DCT system" is disclosed in Korean Patent Publication No. 10-2016-0032628 (published on March 24, 2016).

### DESCRIPTION

According to one aspect of the present invention, the present invention has been made in order to solve the above-mentioned problems, and an object of the present invention is to provide an apparatus and a method for controlling transmission of a DCT which applies a safety mechanism based on gear position monitoring in a transmission including a normally-closed type clutch.

The object of the invention is solved by the independent claims. Further embodiments of the invention are described in the subclaims.

### DESCRIPTION OF DRAWINGS

FIG. 1 is a block diagram of an apparatus for controlling transmission of a DCT according to an embodiment of the present invention.
FIG. 2 is a flowchart for explaining a method for controlling transmission of the DCT according to an embodiment of the present invention.
FIGS. 3 to 5 are views illustrating an example of an abnormal gear shift in the apparatus and method for controlling transmission of the DCT according to an embodiment of the present invention.

Hereinafter, an apparatus and method for controlling transmission of a DCT according to an embodiment of the present invention will be described with reference to the accompanying drawings. In this process, thicknesses of lines and sizes of components illustrated in the drawings may be exaggerated for clarity and convenience of explanation.

Also, the terms described below are defined in consideration of functions of the present invention. Thus, definitions of the terms should be made based on the contents throughout this specification.

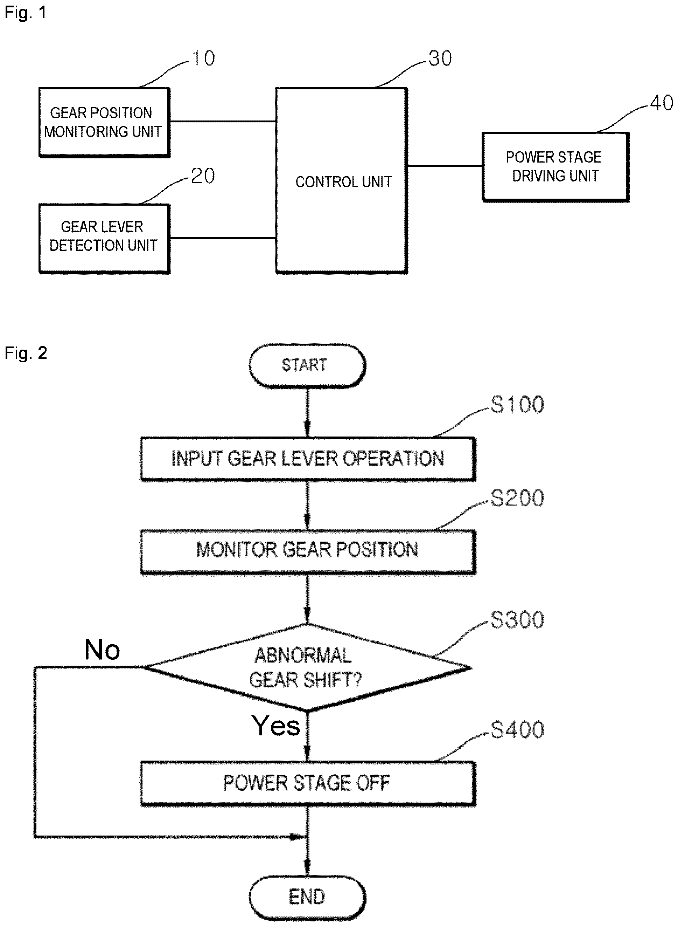

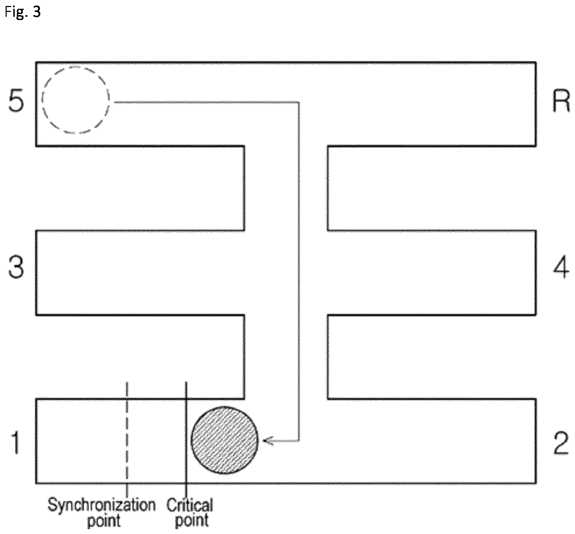

FIG. 1 is a block diagram of an apparatus for controlling transmission of a DCT according to an embodiment of the present invention, and FIGS. 3 to 5 are views illustrating an example of an abnormal gear shift in the apparatus and method for controlling transmission of the DCT according to an embodiment of the present invention. The apparatus for controlling the transmission of the DCT will be described with reference to the drawings.

First, in a DCT system constituted by the conventional normally-opened type clutch, when a control unit (30) sets a power stage state to OFF, a clutch is maintained in an opened state by a specific mechanical system for opening the clutch. Here, in this embodiment, a safety mechanism called level 2 (LEVEL 2) monitoring is applied. When a dangerous situation is detected through the level 2 monitoring, the power stage is set to OFF so that the clutch is opened, and engine power may not be transmitted to a wheel. Thus, a safe state may be achieved.

However, in the DCT constituted by the normally-closed type clutch, when a dangerous situation is detected, and the power stage state is set to OFF, the safe state may not be maintained because the clutch is closed.

Thus, in this embodiment, when the safety mechanism called the level 2 monitoring is applied, the safe state may be achieved without additionally changing the transmission system even in the transmission including the normally-closed type clutch.

As illustrated in FIG. 1, the apparatus for controlling the transmission of the DCT according to an embodiment of the present invention includes a gear position monitoring unit (10), a gear lever position detecting unit (20), a control unit (30), and a power stage driving unit (40).

The gear position monitoring unit (10) monitors a position of a gear to transmit the monitored position to the control unit (30) . The gear position monitoring unit (10) may monitor whether the position of the gear is located at the first, second, third, fourth, fifth, or R stages. Here, the gear position monitoring unit (10) may be provided in the transmission, and its position is not limited.

The gear lever position detecting unit (20) detects a position of a gear lever to transmit the detected position to the control unit (30). That is to say, when a driver operates the gear lever, the gear lever operation of the driver is received and transmitted to the control unit (30) so that the control unit (30) grasps driver's intention to operate the gear lever. Here, the gear lever position detecting unit (20) may detect a range in which the driver operates the gear lever in a P stage, an R stage, an N stage, and a D stage.

The power stage driving unit (40) changes the state of the power stage to on or off when receiving an ON/OFF command from the control unit (30) . Here, when the power stage state is turned off by the power stage driving unit (40), the normally-closed type clutch closes the clutch, and the normally-opened type clutch opens the clutch.

The control unit (30) receives the monitored gear position from the gear position monitoring unit (10) . Also, the position of the gear lever is received from the gear lever position detecting unit (20) to grasp the driver's intention to operate the gear lever.

Also, the control unit (30) may determine whether a gear shift is an abnormal gear shift on the basis of the driver's intention to operate the gear lever detected through the gear lever position detecting unit (20) and the gear position input from the gear position monitoring unit (10).

Here, the control unit (30) may control the transmission to maintain a neutral state in the case of the abnormal gear shift as the result of the determination. That is to say, the control unit (30) sets the power stage state to OFF when the gear position input from the gear position monitoring unit (10) reaches a preset critical point before reaching a synchronization point.

That is to say, the control unit (30) sets the power stage state to OFF to maintain the neutral state before the gear position reaches the synchronization point to be synchronized. That is to say, the critical point for setting the power stage state to OFF should be set before the synchronization point.

Here, in this embodiment, the control unit (30) may be a transmission control unit (TCU).

A case in which the control unit (30) determines that the gear shift is abnormal in this embodiment will be described with reference to FIGS. 3 to 5. Here, in this embodiment, a normally-closed type clutch five-speed transmission system will be described as an example.

As illustrated in FIG. 3, the control unit (30) may determine that the gear shift is abnormal if the gear position input from the gear position monitoring unit (10) moves to a gear position that is lower than a predetermined reference value.

For example, in the case of down-shifting from the fifth stage to the first stage, too low a gear engagement may result in a dangerous situation. Thus, the control unit (30) determines that the situation is a dangerous situation and sets the power stage state to OFF before the gear reaches the synchronization point.

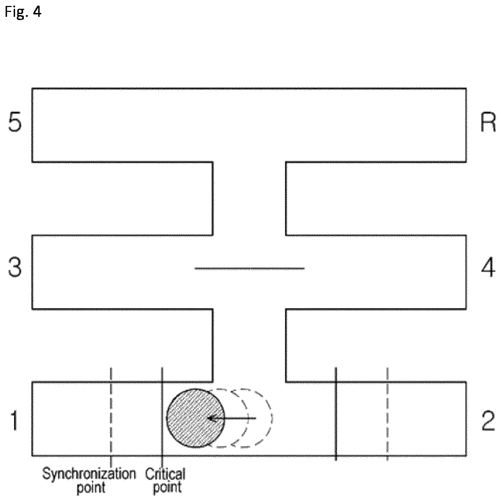

Next, as illustrated in FIG. 4, the control unit (30) may determine the shift as the abnormal gear shift through the gear lever position detecting unit (20) when the gear position moves to a D range in the case in which the driver's intention to operate the gear lever is in the P range or N range.

For example, when the gear position shifts from an initial position in which a neutral state is maintained to the first gear, it is determined that the vehicle is in a dangerous situation, that it is undesired to allow the vehicle to move in a stop state, and the power stage state is turned off before the gear reaches the synchronization point.

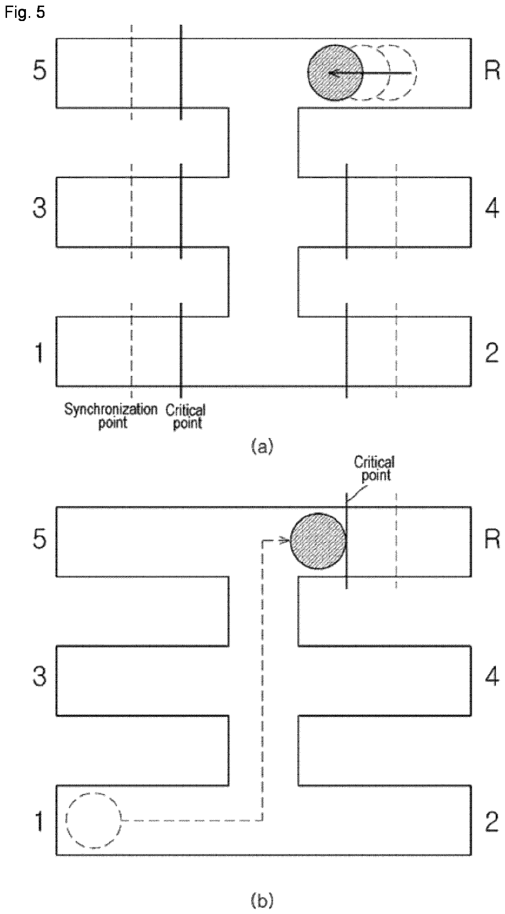

Then, as illustrated in FIG. 5, the control unit (30) may determine that the gear shift is abnormal when the gear position input from the gear position monitoring unit (10) moves to the R range in the case in which the driver's intention to operate the gear lever detected through the gear lever position detecting unit (20) is in the D range, or when the gear position input from the gear position monitoring unit (10) moves to the D range in the case in which the driver' s intention to operate the gear lever detected through the gear lever position detecting unit (20) is within an R range.

For example, when the driver moves the gear lever to the D range but the vehicle is moving backward, or when the driver moves the gear lever to the R range but the vehicle is moving forward, it is determined to be a dangerous situation, and thus, the power stage state is set to OFF before the gear reaches the synchronization point.

That is to say, the control unit (30) applies the level 2 monitoring to set the power stage state to OFF when it is determined to be a dangerous situation and tries to switch the transmission to the neutral state by setting the power stage state to OFF before gear synchronization starts. Thus, in the dangerous situation, it is possible to switch to the neutral state before the gear is abnormally engaged to achieve the safe state.

FIG. 2 is a flowchart for explaining a method for controlling the transmission of the DCT according to an embodiment of the present invention, and the method for controlling the transmission of the DCT will be described as follows.

First, the control unit (30) receives the position of the gear lever by the gear lever operation from the gear lever position detecting unit (20) (S100).

That is to say, when the driver operates the gear lever, the gear lever position detecting unit (20) receives the gear lever operation of the driver to transmit the received gear lever operation to the control unit (30) so that the control unit (30) grasps the driver's intention to operate the gear lever.

Next, the control unit (30) receives the monitored gear position from the gear position monitoring unit (10) (S200).

The gear position monitoring unit (10) may monitor whether the position of the gear is located at the first, second, third, fourth, fifth, or R stages to transmit the monitor position to the control unit (30).

Then, the control unit (30) may determine whether a gear shift is an abnormal gear shift on the basis of the driver's intention to operate the gear lever detected through the gear lever position detecting unit (20) and the gear position input from the gear position monitoring unit (10) (S300).

That is to say, as illustrated in FIG. 3, the control unit (30) may determine that the gear shift is abnormal if the gear position input from the gear position monitoring unit (10) moves to a gear position that is lower than a predetermined reference value.

Also, as illustrated in FIG. 4, the control unit (30) may determine the shift as the abnormal gear shift through the gear lever position detecting unit (20) when the gear position input from the gear position monitoring unit (10) moves to a D range in the case in which the driver's intention to operate the gear lever is in the P range or N range.

Also, as illustrated in FIG. 5, the control unit (30) may determine that the gear shift is abnormal when the gear position input from the gear position monitoring unit (10) moves to the R range in the case in which the driver's intention to operate the gear lever detected through the gear lever position detecting unit (20) is in the D range, or when the gear position input from the gear position monitoring unit (10) moves to the D range in the case in which the driver' s intention to operate the gear lever detected through the gear lever position detecting unit (20) is within the R range.

When it is determined to be the abnormal gear shift in the step S300, the control unit (30) sets the power stage state to OFF (S400).

Here, the control unit (30) may transmit an off command to the power stage driving unit (40) to set the power stage state to OFF. That is to say, the control unit (30) sets the power stage state to OFF so that the transmission is maintained in the neutral state.

That is to say, the control unit (30) sets the power stage state to OFF when the gear position input from the gear position monitoring unit (10) reaches a preset critical point before reaching a synchronization point.

That is to say, the control unit (30) sets the power stage state to OFF to maintain the neutral state before the gear position reaches the synchronization point to be synchronized.

On the other hand, in the step S300, when the control unit (30) does not determine that the gear shift is the abnormal gear shift, the control unit (30) terminates and maintains the power stage state in the ON state.

In summary, the control unit (30) applies the level 2 monitoring to set the power stage state to OFF when it is determined to be a dangerous situation and tries to switch the transmission to the neutral state by setting the power stage state to OFF before gear synchronization starts. Thus, in the dangerous situation, it is possible to switch to the neutral state before the gear is abnormally engaged to achieve the safe state.

As described above, in the apparatus and method for controlling transmission of a DCT according to an embodiment of the present invention, the safety mechanism based on the gear position monitoring is applied in the transmission including the normally-closed type clutch to maintain the safe state, thereby achieving the safe state without additionally changing the transmission system in the existing safety mechanism.

While the present invention has been shown and described particularly with reference to exemplary embodiments thereof, it will be understood by those of ordinary skill in the art that various changes in form and details may be made therein without departing from the scope of the invention as defined by the appended claims.

Therefore, the technical protection scope of the present invention should be defined by the following claims.

### DESCRIPTION OF SYMBOLS

10: Gear position monitoring unit
20: Gear lever position detecting unit
30: Control unit
40: Power stage driving unit

## Claims

1. An apparatus for controlling transmission of a Dual clutch transmission (DCT) provided with a normally-closed type clutch, comprising:
a gear lever position detecting unit (20) receiving a gear lever operation of a driver;
a gear position monitoring unit (10) monitoring a position of a gear in the transmission; and
a control unit (30) determining whether a gear shift is abnormal on the basis of the position of the gear lever and the gear position monitored through the gear position monitoring unit (10) to control the transmission to be maintained in a neutral state; and setting a power stage state to OFF at a preset critical point before the gear position input from the gear position monitoring unit (10) reaches a synchronization point, when it is determined that the gear position is abnormal, whereby the power stage state OFF is a state which results in closing the normally-closed type clutch of the Dual clutch transmission,
**characterized in that**:
the control unit (30) determines that the gear shift is abnormal when the gear position input from the gear position monitoring unit (10) moves to a gear position corresponding to the D range in a case in which the gear lever position detected through the gear lever position detecting unit (20) is within a P or N range.

2. The apparatus for controlling the transmission of the DCT of claim 1, wherein
the control unit (30) determines that the gear shift is abnormal when the gear position input from the gear position monitoring unit (10) moves to a gear position lower than a preset reference value.

3. The apparatus for controlling the transmission of the DCT of claim 1, wherein
the control unit (30) determines that the gear shift is abnormal when the gear position input from the gear position monitoring unit (10) moves to an R range in the case in which the position of the gear lever detected through the gear lever position detecting unit (20) is in a D range, or when the gear position input from the gear position monitoring unit (10) moves to the D range in the case in which the position of the gear lever detected through the gear lever position detecting unit (20) is within an R range.

4. A method for controlling transmission of a Dual clutch transmission (DCT) provided with normally-closed type clutches, comprising steps of:
allowing a control unit (30) to operate a gear lever through a gear lever position detecting unit (20);
allowing the control unit (30) to receive a monitored gear position from a gear position monitoring unit (10);
allowing the control unit (30) to determine whether a gear shift is abnormal on the basis of the position of the gear lever and the monitored gear position;
allowing the transmission to be maintained in a neutral state when the gear shift is abnormal as a result of the determination; and
allowing the control unit (30) to set a power stage state to OFF resulting in closing the clutch at a preset critical point before the gear position input from the gear position monitoring unit (10) reaches a synchronization point, when it is determined that the gear position is abnormal, **characterized in that**:
in the determining whether the gear shift is abnormal, the method further comprises a step of allowing the control unit (30) to determine that the gear shift is abnormal when the gear position input from the gear position monitoring unit (10) moves to a gear position corresponding to a D range in a case in which the gear lever position detected through the gear lever position detecting unit (20) is within a P or N range.

5. The method for controlling the transmission of the DCT of claim 4, wherein
in the determining of whether the gear shift is abnormal, the control unit (30) determines that the gear shift is abnormal when the gear position input from the gear position monitoring unit (10) moves to a gear position lower than a preset reference value.

6. The method for controlling the transmission of the DCT of claim 4, wherein in the determining of whether the gear shift is abnormal, the control unit (30) determines that the gear change is abnormal when the gear position input from the gear position monitoring unit (10) moves to an R range in the case in which the position of the gear lever detected through the gear lever position detecting unit (20) is in a D range, or when the gear position input from the gear position monitoring unit (10) moves to the D range in the case in which the gear lever detected through the gear lever position detecting unit (20) is within an R range.

## Patentansprüche

1. Einrichtung zum Steuern einer Übersetzung eines Doppelkupplungsgetriebes (DCT), das mit einer Kupplung vom normalerweise geschlossenen Typ versehen ist, umfassend:
eine Ganghebelpositionsdetektionseinheit (20), die eine Ganghebelbetätigung eines Fahrers empfängt;
eine Gangpositionsüberwachungseinheit (10), die eine Position eines Gangs in dem Getriebe überwacht; und
eine Steuereinheit (30), die auf der Basis der Position des Ganghebels und der durch die Gangpositionsüberwachungseinheit (10) überwachten Gangposition bestimmt, ob eine Gangschaltung anormal ist, um das Getriebe so zu steuern, dass es in einem neutralen Zustand gehalten wird; und die einen Leistungsstufenzustand an einem voreingestellten kritischen Punkt, bevor die von der Gangpositionsüberwachungseinheit (10) eingegebene Gangposition einen Synchronisationspunkt erreicht, auf AUS einstellt, wenn bestimmt wird, dass die Gangposition abnormal ist, wobei der Leistungsstufenzustand AUS ein Zustand ist, der zu einem Schließen der Kupplung vom normalerweise geschlossenen Typ des Doppelkupplungsgetriebes führt, **dadurch gekennzeichnet, dass**:
die Steuereinheit (30) bestimmt, dass die Gangschaltung abnormal ist, wenn sich die von der Gangpositionsüberwachungseinheit (10) eingegebene Gangposition in einem Fall, in dem die durch die Ganghebelpositionsdetektionseinheit (20) detektierte Ganghebelposition innerhalb eines P- oder N-Bereichs ist, zu einer Gangposition bewegt, die dem D-Bereich entspricht.

2. Einrichtung zum Steuern der Übersetzung des DCT nach Anspruch 1, wobei die Steuereinheit (30) bestimmt, dass die Gangschaltung abnormal ist, wenn sich die von der Gangpositionsüberwachungseinheit (10) eingegebene Gangposition zu einer Gangposition bewegt, die niedriger als ein voreingestellter Referenzwert ist.

3. Einrichtung zum Steuern der Übersetzung des DCT nach Anspruch 1, wobei die Steuereinheit (30) bestimmt, dass die Gangschaltung abnormal ist, wenn sich die von der Gangpositionsüberwachungseinheit (10) eingegebene Gangposition in dem Fall, in dem die durch die Ganghebelpositionsdetektionseinheit (20) detektierte Position des Ganghebels in einem D-Bereich ist, zu einem R-Bereich bewegt, oder wenn sich die von der Gangpositionsüberwachungseinheit (10) eingegebene Gangposition in dem Fall, in dem die durch die Ganghebelpositionsdetektionseinheit (20) detektierte Position des Ganghebels in einem R-Bereich ist, zu dem D-Bereich bewegt.

4. Verfahren zum Steuern einer Übersetzung eines Doppelkupplungsgetriebes (DCT), das mit Kupplungen vom normalerweise geschlossenen Typ versehen ist, umfassend die folgenden Schritte:
Ermöglichen, dass eine Steuereinheit (30) einen Ganghebel durch eine Ganghebelpositionsdetektionseinheit (20) betätigt;
Ermöglichen, dass die Steuereinheit (30) eine überwachte Gangposition von einer Gangpositionsüberwachungseinheit (10) empfängt;
Ermöglichen, dass die Steuereinheit (30) auf der Basis der Position des Ganghebels und der überwachten Gangposition bestimmt, ob eine Gangschaltung abnormal ist;
Ermöglichen, dass das Getriebe in einem neutralen Zustand gehalten wird, wenn die Gangschaltung als ein Ergebnis der Bestimmung abnormal ist; und
Ermöglichen, dass die Steuereinheit (30) einen Leistungsstufenzustand an einem voreingestellten kritischen Punkt, bevor die von der Gangpositionsüberwachungseinheit (10) eingegebene Gangposition einen Synchronisationspunkt erreicht, auf AUS einstellt, was zu einem Schließen der Kupplung führt, wenn bestimmt wird, dass die Gangposition abnormal ist, **dadurch gekennzeichnet, dass**:
bei dem Bestimmen, ob die Gangschaltung abnormal ist, das Verfahren ferner einen Schritt zum Ermöglichen, dass die Steuereinheit (30) bestimmt, dass die Gangschaltung abnormal ist, wenn sich die von der Gangpositionsüberwachungseinheit (10) eingegebene Gangposition in einem Fall, in dem die durch die Ganghebelpositionsdetektionseinheit (20) detektierte Ganghebelposition innerhalb eines P- oder N-Bereichs ist, zu einer Gangposition bewegt, die einem D-Bereich entspricht, umfasst.

5. Verfahren zum Steuern der Übersetzung des DCT nach Anspruch 4, wobei bei dem Bestimmen, ob die Gangschaltung abnormal ist, die Steuereinheit (30) bestimmt, dass die Gangschaltung abnormal ist, wenn sich die von der Gangpositionsüberwachungseinheit (10) eingegebene Gangposition zu einer Gangposition bewegt, die niedriger als ein voreingestellter Referenzwert ist.

6. Verfahren zum Steuern der Übersetzung des DCT nach Anspruch 4, wobei bei dem Bestimmen, ob die Gangschaltung abnormal ist, die Steuereinheit (30) bestimmt, dass die Gangänderung abnormal ist, wenn sich die von der Gangpositionsüberwachungseinheit (10) eingegebene Gangposition in dem Fall, in dem die durch die Ganghebelpositionsdetektionseinheit (20) detektierte Position des Ganghebels in einem D-Bereich ist, zu einem R-Bereich bewegt, oder wenn sich die von der Gangpositionsüberwachungseinheit (10) eingegebene Gangposition in dem Fall, in dem der durch die Ganghebelpositionsdetektionseinheit (20) detektierte Ganghebel in einem R-Bereich ist, zu dem D-Bereich bewegt.

## Revendications

1. Appareil de commande de transmission d'une transmission à double embrayage (DCT) pourvue d'un embrayage de type normalement fermé, comprenant :
une unité de détection de position de levier de vitesse (20) recevant un actionnement du levier de vitesse d'un conducteur ;
une unité de surveillance de position d'engrenage (10) surveillant une position d'un engrenage dans la transmission ; et
une unité de commande (30) déterminant si un changement de vitesse est anormal en fonction de la position du levier de vitesse et de la position d'engrenage surveillée par l'intermédiaire de l'unité de surveillance de position d'engrenage (10) pour commander le maintien de la transmission au point mort ; et le réglage d'un état d'étage de puissance désactivé à un point critique prédéfini avant que l'entrée de position d'engrenage provenant de l'unité de surveillance de position d'engrenage (10) atteigne un point de synchronisation, lorsqu'il est déterminé que la position d'engrenage est anormale, selon lequel l'état d'étage de puissance désactivé est un état qui entraîne la fermeture de l'embrayage de type normalement fermé de la transmission à double embrayage, **caractérisé en ce que** :
l'unité de commande (30) détermine que le changement de vitesse est anormal lorsque l'entrée de position d'engrenage provenant de l'unité de surveillance de position d'engrenage (10) passe à une position d'engrenage correspondant à la plage D dans un cas dans lequel la position de levier de vitesse détectée par l'intermédiaire de l'unité de détection de position de levier de vitesse (20) est dans une plage P ou N.

2. Appareil de commande de la transmission de la DCT selon la revendication 1, dans lequel
l'unité de commande (30) détermine que le changement de vitesse est anormal lorsque l'entrée de position d'engrenage provenant de l'unité de surveillance de position d'engrenage (10) passe à une position d'engrenage inférieure à une valeur de référence prédéfinie.

3. Appareil de commande de la transmission de la DCT selon la revendication 1, dans lequel
l'unité de commande (30) détermine que le changement de vitesse est anormal lorsque l'entrée de position d'engrenage provenant de l'unité de surveillance de position d'engrenage (10) passe à une plage R dans le cas dans lequel la position du levier de vitesse détectée par l'intermédiaire de l'unité de détection de position de levier de vitesse (20) est dans une plage D, ou lorsque l'entrée de position d'engrenage provenant de l'unité de surveillance de position d'engrenage (10) passe à la plage D dans le cas dans lequel la position du levier de vitesse détectée par l'intermédiaire de l'unité de détection de position de levier de vitesse (20) est dans une plage R.

4. Procédé de commande de transmission d'une transmission à double embrayage (DCT) pourvue d'embrayages de type normalement fermé, comprenant les étapes consistant à :
permettre à une unité de commande (30) d'actionner un levier de vitesse par l'intermédiaire d'une unité de détection de position de levier de vitesse (20) ;
permettre à l'unité de commande (30) de recevoir une position d'engrenage surveillée provenant d'une unité de surveillance de position d'engrenage (10) ;
permettre à l'unité de commande (30) de déterminer si un changement de vitesse est anormal en fonction de la position du levier de vitesse et de la position d'engrenage surveillée ;
permettre à la transmission d'être maintenue au point mort lorsque le changement de vitesse est anormal en conséquence de la détermination ; et
permettre à l'unité de commande (30) de régler un état d'étage de puissance désactivé entraînant la fermeture de l'embrayage à un point critique prédéfini avant que l'entrée de position d'engrenage provenant de l'unité de surveillance de position d'engrenage (10) atteigne un point de synchronisation, lorsqu'il est déterminé que la position d'engrenage est anormale, **caractérisé en ce que** :
dans la détermination du fait de savoir si le changement de vitesse est anormal, le procédé comprend en outre une étape consistant à permettre à l'unité de commande (30) de déterminer que le changement de vitesse est anormal lorsque l'entrée de position d'engrenage provenant de l'unité de surveillance de position d'engrenage (10) passe à une position d'engrenage correspondant à une plage D dans un cas dans lequel la position de levier de vitesse détectée par l'intermédiaire de l'unité de détection de position de levier de vitesse (20) est dans une plage P ou N.

5. Procédé de commande de la transmission de la DCT selon la revendication 4, dans lequel
dans la détermination du fait de savoir si le changement de vitesse est anormal, l'unité de commande (30) détermine que le changement de vitesse est anormal lorsque l'entrée de position d'engrenage provenant de l'unité de surveillance de position d'engrenage (10) passe à une position d'engrenage inférieure à une valeur de référence prédéfinie.

6. Procédé de commande de la transmission de la DCT selon la revendication 4, dans lequel dans la détermination du fait de savoir si le changement de vitesse est anormal, l'unité de commande (30) détermine que le changement de vitesse est anormal lorsque l'entrée de position d'engrenage provenant de l'unité de surveillance de position d'engrenage (10) passe à une plage R dans le cas dans lequel la position du levier de vitesse détectée par l'intermédiaire de l'unité de détection de position de levier de vitesse (20) est dans une plage D, ou lorsque l'entrée de position d'engrenage provenant de l'unité de surveillance de position d'engrenage (10) passe à la plage D dans le cas dans lequel le levier de vitesse détecté par l'intermédiaire de l'unité de détection de position de levier de vitesse (20) est dans une plage R.
